# EUROPÄISCHE PATENTSCHRIFT

(11) **EP 3 935 308 B1**
(45) Veröffentlichungstag und Bekanntmachung des Hinweises auf die Patenterteilung: **22.03.2023**
(21) Anmeldenummer: 20707568.0
(22) Anmeldetag: 28.02.2020
(51) Int. Cl.: F17C 13/00

(54) **TRANSPORTBEHÄLTER UND VERFAHREN**
TRANSPORT CONTAINER AND METHOD
RÉSERVOIR DE TRANSPORT ET PROCÉDÉ

(30) Priorität: 06.03.2019 EP 19020105
(43) Veröffentlichungstag der Anmeldung: 12.01.2022
(73) Patentinhaber: Linde GmbH, 82049 Pullach (DE)
(72) Erfinder: POSSELT, Heinz, 83043 Bad Aibling (DE); BICHLMEIER, Jürgen, 84518 Garching a.d.Alz (DE)
(74) Vertreter: Meilinger, Claudia Sabine
(86) Internationale Anmeldenummer: PCT/EP2020/025101
(87) Internationale Veröffentlichungsnummer: WO 2020/177924

(56) Entgegenhaltungen:
- EP-A1- 3 361 137
- WO-A1-2017/190846
- WO-A1-2017/190848
- WO-A1-2017/190849
- US-A- 2 863 297

## Beschreibung

Die Erfindung betrifft einen Transportbehälter für Helium sowie ein Verfahren zum Herstellen eines derartigen Transportbehälters.

Helium wird zusammen mit Erdgas gefördert. Ein Transport großer Mengen Helium ist aus ökonomischen Gründen nur in flüssiger beziehungsweise überkritischer Form, das heißt, bei einer Temperatur von etwa 4,2 bis 10 K und unter einem Druck von 1 bis 13 bar sinnvoll. Zum Transport des flüssigen beziehungsweise überkritischen Heliums werden Transportbehälter eingesetzt, die, um einen zu schnellen Druckanstieg des Heliums zu vermeiden, aufwendig thermisch isoliert werden. Derartige Transportbehälter können beispielsweise mit Hilfe von flüssigem Stickstoff gekühlt werden. Hierbei wird ein mit dem flüssigen Stickstoff gekühlter thermischer Schild vorgesehen. Der thermische Schild schirmt einen Innenbehälter des Transportbehälters ab. In dem Innenbehälter ist das flüssige beziehungsweise tiefkalte Helium aufgenommen. Die Haltezeit für das flüssige beziehungsweise tiefkalte Helium beträgt bei derartigen Transportbehältern etwa 45 Tage, das heißt, nach dieser Zeit ist der Druck im Innenbehälter auf den Maximalwert von 13 bar gestiegen. Die thermische Dämmung des Transportbehälters besteht aus einer Hoch-Vakuum-Vielschichtisolierung.

Die WO 2017/190848 A1, die den Oberbegriff des Anspruchs 1 bildet, beschreibt einen derartigen Transportbehälter für flüssiges Helium. Dieser Transportbehälter umfasst einen Innenbehälter zum Aufnehmen des Heliums, ein Isolationselement, das außenseitig an dem Innenbehälter vorgesehen ist, einen Kühlmittelbehälter zum Aufnehmen einer kryogenen Flüssigkeit, einen Außenbehälter, in dem der Innenbehälter und der Kühlmittelbehälter aufgenommen sind, und einen thermischen Schild, der mit Hilfe der kryogenen Flüssigkeit aktiv kühlbar ist und in dem der Innenbehälter aufgenommen ist. Dabei ist zwischen dem Isolationselement und dem thermischen Schild ein umlaufender Spalt vorgesehen und das Isolationselement weist eine dem thermischen Schild zugewandte Kupferschicht auf. Die Kupferschicht ist dabei als gewalzte Kupferfolie ausgebildet.

Vor diesem Hintergrund besteht die Aufgabe der vorliegenden Erfindung darin, einen verbesserten Transportbehälter zur Verfügung zu stellen.

Demgemäß wird ein Transportbehälter für Helium vorgeschlagen. Der Transportbehälter umfasst einen Innenbehälter zum Aufnehmen des Heliums, ein Isolationselement, das außenseitig an dem Innenbehälter vorgesehen ist, einen Kühlmittelbehälter zum Aufnehmen eines kryogenen Fluids, einen Außenbehälter, in dem der Innenbehälter und der Kühlmittelbehälter aufgenommen sind, und einen thermischen Schild, der mit Hilfe des kryogenen Fluids aktiv kühlbar ist und in dem der Innenbehälter aufgenommen ist, wobei zwischen dem Isolationselement und dem thermischen Schild ein umlaufender Spalt vorgesehen ist, und wobei das Isolationselement eine dem thermischen Schild zugewandte elektrolytisch abgeschiedene Kupferschicht aufweist.

Dadurch, dass zwischen dem Isolationselement und dem thermischen Schild der umlaufende Spalt vorgesehen ist, weist das Isolationselement keinen mechanischen Kontakt zu dem thermischen Schild auf. Hierdurch kann Wärme von den Oberflächen des Innenbehälters nur durch Strahlung und Restgasleitung auf den thermischen Schild übertragen werden. Dadurch, dass der thermische Schild vorgesehen ist, ist ferner gewährleistet, dass der Innenbehälter nur von Flächen umgeben ist, die eine dem Siedepunkt des kryogenen Fluids (Siedepunkt Stickstoff bei 1,3 bara: 79,5 K) entsprechende Temperatur aufweisen. Hierdurch besteht zwischen dem thermischen Schild (79,5 K) und dem Innenbehälter (Temperatur des Heliums bei 1 bara bis 13 bara: 4,2 bis 10 K) im Vergleich zur Umgebung des Außenbehälters nur eine geringe Temperaturdifferenz.

Durch die Verwendung einer elektrolytisch abgeschiedenen Kupferschicht anstelle einer gewalzten Kupferfolie hat sich nun gezeigt, dass der Gesamtwärmeinfall von circa 6 W (gewalzte Kupferfolie) auf 3,5 W (elektrolytisch abgeschiedene Kupferschicht) reduziert werden kann. Hierdurch kann im Vergleich zu dem einleitend erwähnten Transportbehälter die Haltezeit für das flüssige Helium von 45 Tagen auf 85 Tage deutlich verlängert werden. Dies vereinfacht den Transport, ermöglicht längere Transportwege und verringert die Transportkosten.

Der Innenbehälter kann auch als Heliumbehälter oder Innentank bezeichnet werden. Der Transportbehälter kann auch als Helium-Transportbehälter bezeichnet werden. Das Helium kann als flüssiges oder tiefkaltes Helium bezeichnet werden. Das Helium ist insbesondere ebenfalls ein kryogenes Fluid. Der Transportbehälter ist insbesondere dazu eingerichtet, das Helium in tiefkalter oder flüssiger beziehungsweise in überkritischer Form zu transportieren. In der Thermodynamik ist der kritische Punkt ein thermodynamischer Zustand eines Stoffes, der sich durch Angleichen der Dichten von flüssiger und Gasphase kennzeichnet. Die Unterschiede zwischen beiden Aggregatzuständen hören an diesem Punkt auf zu existieren. In einem Phasendiagramm stellt der Punkt das obere Ende der Dampfdruckkurve dar. Das Helium wird in flüssiger beziehungsweise tiefkalter Form in den Innenbehälter eingefüllt. In dem Innenbehälter bilden sich dann eine Flüssigkeitszone mit flüssigem Helium und eine Gaszone mit gasförmigem Helium. Das Helium weist also nach dem Einfüllen in den Innenbehälter zwei Phasen mit unterschiedlichen Aggregatzuständen, nämlich flüssig und gasförmig, auf. Das heißt, in dem Innenbehälter befindet sich eine Phasengrenze zwischen dem flüssigen Helium und dem gasförmigen Helium. Nach einer gewissen Zeit, das heißt, wenn der Druck in dem Innenbehälter steigt, wird das sich in dem Innenbehälter befindende Helium einphasig. Die Phasengrenze existiert dann nicht mehr und das Helium ist überkritisch.

Das kryogene Fluid oder das Kryogen ist vorzugsweise flüssiger Stickstoff. Das kryogene Fluid kann auch als Kühlmittel bezeichnet werden. Das kryogene Fluid kann alternativ beispielsweise auch flüssiger Wasserstoff oder flüssiger Sauerstoff sein. Darunter, dass der thermische Schild "aktiv kühlbar" oder "aktiv gekühlt" ist, ist insbesondere zu verstehen, dass der thermische Schild von dem kryogenen Fluid zumindest partiell durchströmt oder umströmt wird, um diesen zu kühlen. Hierzu kann der thermische Schild eine Kühlleitung oder mehrere Kühlleitungen umfassen, in denen das kryogene Fluid aufgenommen ist. Dabei siedet das kryogene Fluid. Es liegt somit die gasförmige Phase sowie die flüssige Phase des kryogenen Fluids vor. In der Kühlleitung kann das kryogene Fluid daher sowohl in seiner gasförmigen als auch in seiner flüssigen Phase aufgenommen sein. Im Gegensatz zu einer "aktiven Kühlung" wird der thermische Schild bei einer "passiven Kühlung" im Wesentlichen nur durch Wärmeleitung gekühlt. Auch für die passive Kühlung kann ein kryogenes Fluid eingesetzt werden. Dieses umströmt oder durchströmt den thermischen Schild in diesem Fall jedoch nicht, sondern der thermische Schild ist beispielsweise teilweise in Kontakt mit dem kryogenen Fluid. Bereiche des thermischen Schilds, die nicht direkt in Kontakt mit dem kryogenen Fluid sind, werden durch Wärmeleitung gekühlt.

Insbesondere ist der thermische Schild nur in einem Betriebszustand, das heißt, dann wenn der Innenbehälter mit Helium gefüllt ist, aktiv gekühlt. Wenn das kryogene Fluid verbraucht ist, kann der thermische Schild auch ungekühlt sein. Bei dem aktiven Kühlen des thermischen Schilds kann das kryogene Fluid sieden und verdampfen. Der thermische Schild weist hierdurch eine Temperatur auf, die annähernd oder genau dem Siedepunkt des kryogenen Fluids entspricht.

Der thermische Schild ist insbesondere innerhalb des Außenbehälters angeordnet. Der Kühlmittelbehälter ist insbesondere außerhalb des thermischen Schilds platziert. Der Innenbehälter ist bevorzugt außerhalb des Kühlmittelbehälters angeordnet. Umgekehrt ist der Kühlmittelbehälter auch außerhalb des Innenbehälters positioniert, wobei sowohl der Kühlmittelbehälter als auch der Innenbehälter innerhalb des Außenbehälters angeordnet sind. Besonders bevorzugt ist der Kühlmittelbehälter neben dem Innenbehälter und beabstandet von diesem positioniert.

Vorzugsweise weist der Innenbehälter und insbesondere das Isolationselement außenseitig eine Temperatur auf, die annähernd oder genau der Temperatur des Heliums entspricht. Der thermische Schild kann einen rohrförmigen Basisabschnitt und einen den Basisabschnitt stirnseitig abschließenden Deckelabschnitt aufweisen, der zwischen dem Innenbehälter und dem Kühlmittelbehälter angeordnet ist. Vorzugsweise schließt der Deckelabschnitt den Basisabschnitt dabei stirnseitig vollständig ab. Der Basisabschnitt des thermischen Schilds kann einen kreisrunden oder einen annähernd kreisrunden Querschnitt aufweisen. Der Außenbehälter, der Innenbehälter, der Kühlmittelbehälter und der thermische Schild können rotationssymmetrisch zu einer gemeinsamen Symmetrie- oder Mittelachse aufgebaut sein. Der Innenbehälter und der Außenbehälter sind vorzugsweise aus Edelstahl gefertigt. Der Innenbehälter weist vorzugsweise einen rohrförmigen Basisabschnitt auf, der beidseitig mit gewölbten Deckelabschnitten verschlossen ist. Der Innenbehälter ist fluiddicht. Der Außenbehälter weist vorzugsweise ebenfalls einen rohrförmigen Basisabschnitt auf, der stirnseitig beidseits von Deckelabschnitten verschlossen ist. Der Basisabschnitt des Innenbehälters und/oder der Basisabschnitt des Außenbehälters können einen einen kreisrunden oder einen annähernd kreisrunden Querschnitt aufweisen.

Ein Zwischenraum zwischen dem Innenbehälter und dem Außenbehälter ist bevorzugt evakuiert. Um im Falle eines Zusammenbruchs des Vakuums das in dem Innenbehälter enthaltene Helium über an diesem vorgesehene Sicherheitsventile ablassen zu können, ist der Innenbehälter mit dem Isolationselement umgeben, das auch im Nicht-Vakuum-Fall den Wärmeinfall reduziert. Hierdurch weist das Isolationselement die Funktion einer Notisolierung für den Fall eines Vakuumzusammenbruchs auf.

Das Isolationselement ist bevorzugt mehrlagig. Das Isolationselement kann auch als mehrlagiges Isolationselement bezeichnet werden. Darunter, dass das Isolationselement "mehrlagig" ist, ist insbesondere zu verstehen, dass das Isolationselement mehrere übereinander angeordnete Schichten oder Lagen, beispielsweise sich abwechselnde Schichten aus Aluminiumfolie und Glaspapier, aufweist, wobei eine äußerste Schicht oder Lage die elektrolytisch abgeschiedene Kupferschicht ist. "Äußerste" Schicht oder Lage meint dabei eine von dem Innenbehälter am weitesten entfernte Schicht des Isolationselements. Die äußerste Schicht ist dabei dem thermischen Schild am nächsten und diesem auch zugewandt. Zwischen dem Innenbehälter und dem thermischen Schild ist ein Zwischenraum vorgesehen, in dem das Isolationselement angeordnet ist. Dieser Zwischenraum ist bis auf den umlaufenden Spalt mit dem Isolationselement ausgefüllt. Beispielsweise ist das Isolationselement auf den Innenbehälter aufgewickelt.

Darunter, dass die Kupferschicht "elektrolytisch abgeschieden" ist, ist insbesondere zu verstehen, dass die Kupferschicht aus einer Kupferlösung, insbesondere aus einer Lösung, die Kupferionen enthält, auf einem Träger, beispielsweise auf einer Metalltrommel, abgeschieden wird. Die Kupferschicht wird also im Gegenteil zu einer gewalzten Kupferfolie auf atomarer Ebene aus der Kupferlösung aufgebaut. Die Kupferschicht weist eine metallisch blanke Oberfläche auf. Das heißt, die Kupferschicht ist nicht oberflächenbeschichtet oder oxidiert. Da die Emissivität der Kupferschicht mit abnehmender Temperatur abnimmt, nimmt auch der Wärmeübergang durch Strahlung ab, so dass der Gesamtwärmeeinfall auf den Innenbehälter auf etwa 3,5 W über die gesamte Helium-Haltezeit gedrückt werden kann.

Die Kupferschicht weist vorzugsweise eine Dicke von zumindest 5 µm, besonders bevorzugt von mindestens 10 µm, bevorzugt von weniger als 20 µm, besonders bevorzugt im Bereich von 10 bis 20 µm auf. Die Kupferschicht weist vorzugweise einen Massenanteil von Kupfer von zumindest 99% Kupfer und weiter besonders bevorzugt von mindestens 99,9% Kupfer auf. Die Kupferschicht weist vorzugweise eine von Verunreinigungen, wie beispielsweise Fetten oder Ölen, freie Oberfläche auf.

Gemäß einer Ausführungsform weist der umlaufende Spalt eine Spaltbreite von 5 bis 15 mm, bevorzugt von 10 mm, auf.

Darunter, dass der Spalt umlaufend ist, ist zu verstehen, dass der Spalt vollständig um den Innenbehälter herumgeführt ist. Insbesondere ist der Spalt auch an den Deckelabschnitten des Innenbehälters vorgesehen.

Gemäß einer weiteren Ausführungsform ist der umlaufende Spalt evakuiert.

Hierdurch ist gewährleistet, dass Wärme von dem Innenbehälter nur durch Strahlung und Restgasleitung auf den thermischen Schild übertragen werden kann.

Gemäß einer weiteren Ausführungsform weist die Kupferschicht eine Wandstärke von 10 µm bis 20 µm auf.

Die Wandstärke kann auch als Dicke bezeichnet werden. Aufgrund der geringen Wandstärke kann Kupfer eingespart werden. Dies reduziert die Herstellungskosten. Allerdings kann die Kupferschicht auch weniger als 10 µm oder mehr als 20 µm dick sein.

Gemäß einer weiteren Ausführungsform ist das Isolationselement außenseitig an dem Innenbehälter befestigt.

Beispielsweise kann das Isolationselement auf den Innenbehälter aufgewickelt sein. Das Isolationselement kann mit dem Innenbehälter fest verbunden, beispielsweise verklebt, sein.

Gemäß einer weiteren Ausführungsform weist das Isolationselement eine zwischen dem Innenbehälter und der Kupferschicht angeordnete mehrlagige Isolationsschicht auf.

Die Isolationsschicht kann eine sogenannte MLI (engl.: multilayer-insulation) sein. Die Kupferschicht ist vorzugsweise eine zusätzliche Lage einer glatten Kupferfolie aus hochreinem blankem Kupfer, die stramm und ohne Falten auf die LMI aufgezogen ist.

Gemäß einer weiteren Ausführungsform weist die mehrlagige Isolationsschicht mehrere abwechselnd angeordnete Lagen aus Aluminiumfolie und Glaspapier auf.

Die Lagen aus Aluminiumfolie dienen dabei als Reflektor und als mechanische Fixierung für die Lagen aus Glaspapier, die die thermische Dämmung für den Fall des Vakuumzusammenbruchs gewährleisten. Die Aluminiumfolie kann perforiert und geprägt sein.

Gemäß einer weiteren Ausführungsform sind die Lagen aus Aluminiumfolie und Glaspapier spaltfrei auf dem Innenbehälter aufgebracht.

Unter "spaltfrei" ist insbesondere zu verstehen, dass die Lagen aus Aluminiumfolie flächig an den Lagen aus Glaspapier anliegen. Bei dem Aufbringen der mehrlagigen Isolationsschicht auf den Innenbehälter wird dabei auf eine möglichst hohe mechanische Pressung der Lagen aus Aluminiumfolie und Glaspapier geachtet, um zu erreichen, dass alle Lagen möglichst isotherm sind. Eine isotherme Zustandsänderung ist eine thermodynamische Zustandsänderung, bei der die Temperatur unverändert bleibt.

Gemäß einer weiteren Ausführungsform ist die Kupferschicht eine Kupferfolie.

Insbesondere ist die Kupferschicht eine Folie aus hochreinem blankem Kupfer, die stramm und ohne Falten auf die mehrlagige Isolationsschicht aufgezogen ist. Unter einer "Folie" ist vorliegend ein dünnwandiges flächiges Bauteil zu verstehen, das aufgrund seiner geringen Wandstärke, nämlich den zuvor erwähnten 10 µm bis 20 µm, flexibel verformbar ist.

Gemäß einer weiteren Ausführungsform weist die Kupferschicht herstellungsbedingt eine badabgewandte Oberfläche, die dem thermischen Schild zugewandt ist, und eine badzugewandte Oberfläche, die dem thermischen Schild abgewandt ist, auf.

Wie zuvor erwähnt, wird die Kupferschicht auf einem Träger abgeschieden, der in ein mit der Kupferlösung gefülltes Bad getaucht wird. Der Träger kann eine zylindrische Trommel oder Walze sein. Die badabgewandte Oberfläche oder Seite liegt an dem Träger an und kann auch als trägerzugewandte Oberfläche oder Seite oder trommelzugewandte Oberfläche oder Seite bezeichnet werden. Je nach Oberflächenqualität des Trägers, der beispielsweise hochglanzpoliert sein kann, ergibt sich für die badabgewandte Oberfläche im Vergleich zu der badzugewandten Seite eine sehr geringe Rauheit. Die badzugewandte Oberfläche oder Seite liegt nicht an dem Träger an und kann auch als trägerabgewandte Oberfläche oder Seite oder trommelabgewandte Oberfläche oder Seite bezeichnet werden. Die badabgewandte Oberfläche kann auch als glatte Oberfläche, und die badzugewandte Oberfläche kann auch als raue Oberfläche der Kupferschicht bezeichnet werden. Die höhere Rauheit der badzugewandten Oberfläche ergibt sich durch den elektrolytischen Abscheideprozess.

Gemäß einer weiteren Ausführungsform umfasst der Transportbehälter ferner eine zwischen dem thermischen Schild und dem Außenbehälter angeordnete mehrlagige Isolationsschicht.

Die Isolationsschicht ist vorzugsweise ebenfalls eine MLI. Die Isolationsschicht füllt vorzugsweise einen zwischen dem thermischen Schild und dem Außenbehälter vorgesehenen Zwischenraum vollständig aus, so dass die Isolationsschicht sowohl den thermischen Schild als auch den Außenbehälter kontaktiert.

Gemäß einer weiteren Ausführungsform weist die mehrlagige Isolationsschicht mehrere abwechselnd angeordnete Lagen aus Aluminiumfolie und Glasseide, Glasgittergewebe oder Glaspapier auf.

Die Lagen aus Glaspapier, Glasseide oder Glasgittergewebe dienen dabei als Abstandshalter zwischen den Lagen aus Aluminiumfolie, die als Reflektor dienen. Die Aluminiumfolie ist vorzugsweise perforiert und geprägt. Hierdurch kann die zwischen dem thermischen Schild und dem Außenbehälter angeordnete Isolationsschicht störungsfrei evakuiert werden. Auch wird ein unerwünschter mechanisch-thermischer Kontakt zwischen den Aluminiumfolienlagen reduziert. Dieser Kontakt könnte den sich durch Strahlungsaustausch einstellenden Temperaturgradient der Aluminiumfolienlagen stören.

Gemäß einer weiteren Ausführungsform sind die Lagen aus Aluminiumfolie und Glasseide, Glasgittergewebe oder Glaspapier spaltbehaftet auf dem thermischen Schild aufgebracht.

Unter "spaltbehaftet" ist insbesondere zu verstehen, dass zwischen den Lagen aus Aluminiumfolie und den Lagen aus Glasseide, Glasgittergewebe oder Glaspapier jeweils evakuierbare Zwischenräume vorgesehen sind. Vorzugsweise sind die Lagen aus Aluminiumfolie und Glasseide, Glasgittergewebe oder Glaspapier der Isolationsschicht abweichend von dem Isolationselement des Innenbehälters flauschig in den zwischen den thermischen Schild und dem Außenbehälter vorgesehenen Zwischenraum eingebracht. "Flauschig" heißt hierbei, dass die Lagen aus Aluminiumfolie und Glaspapier nicht gepresst sind, so dass durch die Prägung und Perforierung der Aluminiumfolie die Isolationsschicht und damit der Zwischenraum störungsfrei evakuiert werden kann.

Gemäß einer weiteren Ausführungsform ist der Außenbehälter evakuiert.

Hierdurch ist eine sehr gute Wärmeisolierung gewährleistet, da ein Wärmeübertrag nur durch Strahlung und Restgasleitung möglich ist.

Gemäß einer weiteren Ausführungsform umschließt der thermische Schild den Innenbehälter vollständig.

Vorzugsweise ist der thermische Schild aus einem Aluminiumwerkstoff gefertigt. Insbesondere ist der thermische Schild aus einem hochreinen Aluminiumwerkstoff gefertigt. Hierdurch ergeben sich besonders gute Wärmetransport- und Wärmereflexionseigenschaften. Dadurch, dass der thermische Schild den Innenbehälter vollständig umschließt, ist gewährleistet, dass der Innenbehälter vollständig von Flächen umgeben ist, die eine der Siedetemperatur des kryogenen Fluids entsprechende Temperatur aufweisen.

Gemäß einer weiteren Ausführungsform weist der thermische Schild einen Basisabschnitt und zwei Deckelabschnitte auf, die den Basisabschnitt beidseitig stirnseitig abschließen.

Vorzugsweise sind die beiden Deckelabschnitte gewölbt. Insbesondere sind die Deckelabschnitte so an dem Basisabschnitt vorgesehen, dass diese von dem Basisabschnitt weg gewölbt sind. Einer der Deckelabschnitte ist vorzugsweise zwischen dem Kühlmittelbehälter und dem Innenbehälter angeordnet. Hierdurch ist auch bei einem sinkenden Flüssigkeitsstand in dem Kühlmittelbehälter gewährleistet, dass der Innenbehälter nur von Flächen umgeben ist, die eine dem Siedepunkt des kryogenen Fluids entsprechende Temperatur aufweisen.

Gemäß einer weiteren Ausführungsform ist der thermische Schild fluiddurchlässig.

Das heißt, der thermische Schild ist flüssigkeits- und gasdurchlässig. Hierzu kann der thermische Schild beispielsweise Durchbrüche, Lochungen oder Bohrungen aufweisen. Aufgrund der Fluiddurchlässigkeit kann der zwischen dem Innenbehälter und dem thermischen Schild vorgesehene Zwischenraum evakuiert werden.

Gemäß einer weiteren Ausführungsform ist eine Mittelachse des Transportbehälters parallel zu einer Horizontalen orientiert.

Die Horizontale ist insbesondere senkrecht zu einer Schwerkraftrichtung orientiert. Der Transportbehälter ist im Wesentlichen rotationssymmetrisch zu der Mittelachse aufgebaut. Das heißt, beim Transport des Transportbehälters wird dieser "liegend" transportiert.

Ferner wird ein Verfahren zum Herstellen eines wie zuvor erläuterten Transportbehälters für Helium vorgeschlagen. Das Verfahren umfasst die folgenden Schritte: a) Bereitstellen eines Innenbehälters zum Aufnehmen des Heliums, b) Herstellen einer elektrolytisch abgeschiedenen Kupferschicht, und c) außenseitiges Anbringen eines Isolationselements an dem Innenbehälter, wobei das Isolationselement als bezüglich dem Innenbehälter äußerste Lage die Kupferschicht aufweist.

Das Verfahren kann noch die folgenden Schritte umfassen: Bereitstellen und/oder Herstellen eines Kühlmittelbehälters zum Aufnehmen eines kryogenen Fluids. Bereitstellen und/oder Herstellen eines Außenbehälters, in dem der Innenbehälter und der Kühlmittelbehälter aufgenommen werden. Bereitstellen und/oder Herstellen eines thermischen Schilds, der mit Hilfe des kryogenen Fluids aktiv kühlbar ist und in dem der Innenbehälter aufgenommen wird. Dabei wird zwischen dem Isolationselement und dem thermischen Schild ein umlaufender Spalt vorgesehen. Das Isolationselement wird in dem Schritt c) so an dem Innenbehälter angebracht, dass die elektrolytisch abgeschiedene Kupferschicht dem thermischen Schild zugewandt ist.

Gemäß einer Ausführungsform wird in dem Schritt b) die Kupferschicht aus einer Kupferlösung auf einer Trägerfläche elektrolytisch abgeschieden.

Insbesondere wird die Kupferschicht direkt auf der Trägerfläche abgeschieden. Eine zusätzliche Trägerfolie ist verzichtbar. Die zum Abscheiden der Kupferschicht verwendete Kupferlösung kann eine schwefelsaure hochreine Kupferlösung sein.

Gemäß einer weiteren Ausführungsform ist die Trägerfläche zylinderförmig, insbesondere kreiszylinderförmig.

Die Trägerfläche kann eine zylinderförmige Außenfläche einer Trommel oder Walze sein. Allerdings kann die Trägerfläche auch jede beliebige andere Geometrie aufweisen.

Gemäß einer weiteren Ausführungsform wird in dem Schritt c) die Kupferschicht so angeordnet, dass eine badabgewandte Oberfläche der Kupferschicht dem Innenbehälter abgewandt angeordnet wird und eine badzugewandte Oberfläche der Kupferschicht dem Innenbehälter zugewandt angeordnet wird.

Wie zuvor erwähnt, weist die badabgewandte Oberfläche eine geringere Rauheit auf als die badzugewandte Oberfläche.

Die für den Transportbehälter beschriebenen Ausführungsformen und Merkmale gelten für das vorgeschlagene Verfahren entsprechend und umgekehrt.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine genaue Beschränkung auf genau die entsprechende Anzahl von Elementen verwirklich sein muss. Vielmehr sind zahlenmäßige Abweichungen nach oben und nach unten möglich.

Weitere mögliche Implementierungen des Transportbehälters und/oder des Verfahrens umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Transportbehälters und/oder des Verfahrens hinzufügen.

Weitere vorteilhafte Ausgestaltungen des Transportbehälters und/oder des Verfahrens sind Gegenstand der Unteransprüche sowie der im Folgenden beschriebenen Ausführungsbeispiele des Transportbehälters und/oder des Verfahrens. Im Weiteren werden der Transportbehälter und/oder das Verfahren anhand von bevorzugten Ausführungsformen unter Bezugnahme auf die beigelegten Figuren näher erläutert.
Fig. 1 zeigt eine schematische Schnittansicht einer Ausführungsform eines Transportbehälters;
Fig. 2 zeigt die Detailansicht II gemäß Fig. 1;
Fig. 3 zeigt eine schematische Schnittansicht einer Herstellungsvorrichtung zum Herstellen einer Kupferschicht für den Transportbehälter gemäß Fig. 1;
Fig. 4 zeigt die Detailansicht IV gemäß Fig. 3; und
Fig. 5 zeigt ein schematisches Blockdiagramm einer Ausführungsform eines Verfahrens zum Herstellen eines Transportbehälters gemäß Fig. 1.

In den Figuren sind gleiche oder funktionsgleiche Elemente mit denselben Bezugszeichen versehen worden, sofern nichts anderes angegeben ist.

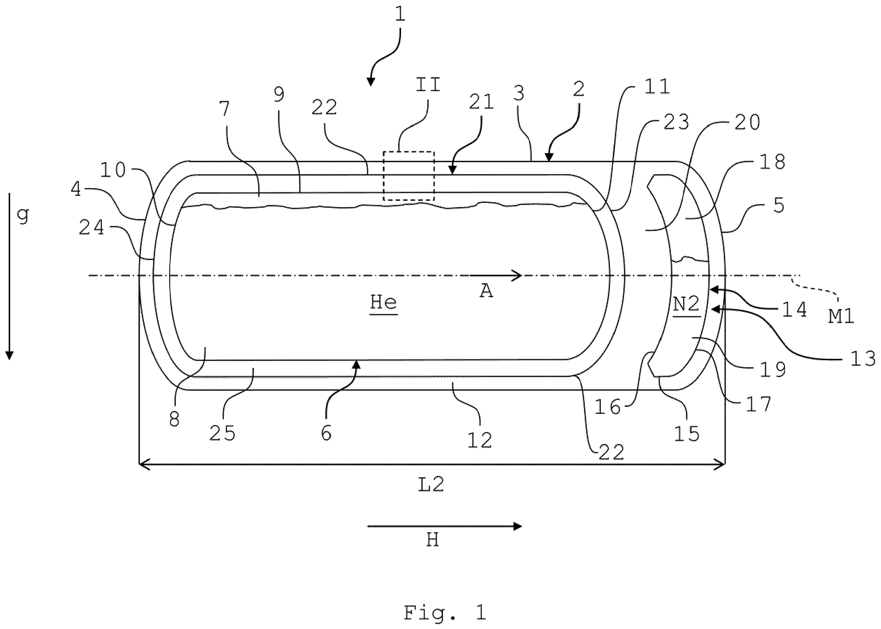

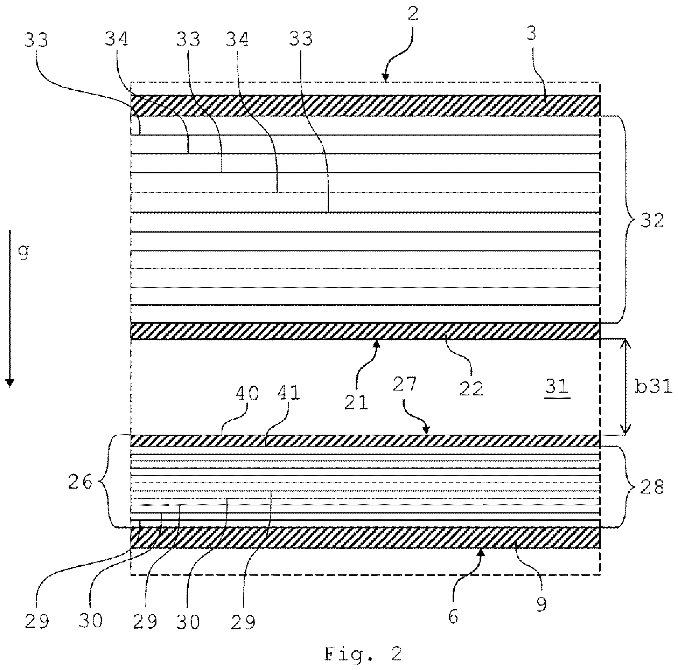

Die Fig. 1 zeigt eine stark vereinfachte schematische Schnittansicht einer Ausführungsform eines Transportbehälters 1 für flüssiges Helium He. Die Fig. 2 zeigt die Detailansicht II gemäß der Fig. 1. Im Folgenden wird auf die Fig. 1 und 2 gleichzeitig Bezug genommen.

Der Transportbehälter 1 kann auch als Helium-Transportbehälter bezeichnet werden. Der Transportbehälter 1 kann auch für andere kryogene Flüssigkeiten eingesetzt werden. Beispiele für kryogene Fluide oder Flüssigkeiten, oder kurz Kryogene, sind das zuvor erwähnte flüssige Helium He (Siedepunkt 1 bara: 4,222 K = -268,928 °C), flüssiger Wasserstoff H2 (Siedepunkt 1 bara: 20,268 K = -252,882 °C), flüssiger Stickstoff N2 (Siedepunkt 1 bara: 77,35 K = -195,80 °C) oder flüssiger Sauerstoff O2 (Siedepunkt 1 bara: 90,18 K = -182,97 °C).

Der Transportbehälter 1 umfasst einen Außenbehälter 2. Der Außenbehälter 2 ist beispielsweise aus Edelstahl gefertigt. Der Außenbehälter 2 kann eine Länge L2 von beispielsweise 10 m aufweisen. Der Außenbehälter 2 umfasst einen rohr- oder zylinderförmigen Basisabschnitt 3, der stirnseitig beidseits jeweils mit Hilfe eines Deckelabschnitts 4, 5, insbesondere mit Hilfe eines ersten Deckelabschnitts 4 und eines zweiten Deckelabschnitts 5, verschlossen ist. Der Basisabschnitt 3 kann im Querschnitt eine kreisrunde oder annähernd kreisrunde Geometrie aufweisen. Die Deckelabschnitte 4, 5 sind gewölbt. Die Deckelabschnitte 4, 5 sind gegensinnig gewölbt, so dass beide Deckelabschnitte 4, 5 bezüglich des Basisabschnitts 3 nach außen gewölbt sind. Der Außenbehälter 2 ist fluiddicht, insbesondere gasdicht. Der Außenbehälter 2 weist eine Symmetrie- oder Mittelachse M1 auf, zu der der Außenbehälter 2 rotationssymmetrisch aufgebaut ist.

Der Transportbehälter 1 umfasst weiterhin einen Innenbehälter 6 zum Aufnehmen des flüssigen Heliums He. Der Innenbehälter 6 ist beispielsweise ebenfalls aus Edelstahl gefertigt. In dem Innenbehälter 6 können, solange sich das Helium He im Zweiphasengebiet befindet, eine Gaszone 7 mit verdampftem Helium He und eine Flüssigkeitszone 8 mit flüssigem Helium He vorgesehen sein. Der Innenbehälter 6 ist fluiddicht, insbesondere gasdicht, und kann ein Abblasventil zum gesteuerten Druckabbau umfassen. Der Innenbehälter 6 umfasst wie der Außenbehälter 2 einen rohr- oder zylinderförmigen Basisabschnitt 9, der beidseitig stirnseitig von Deckelabschnitten 10, 11, insbesondere einem ersten Deckelabschnitt 10 und einem zweiten Deckelabschnitt 11, verschlossen ist. Der Basisabschnitt 9 kann im Querschnitt eine kreisrunde oder annähernd kreisrunde Geometrie aufweisen.

Der Innenbehälter 6 ist, wie der Außenbehälter 2, rotationssymmetrisch zu der Mittelachse M1 ausgebildet. Ein zwischen dem Innenbehälter 6 und dem Außenbehälter 2 vorgesehener Zwischenraum 12 ist evakuiert. Der Transportbehälter 1 umfasst weiterhin ein Kühlsystem 13 mit einem Kühlmittelbehälter 14. In dem Kühlmittelbehälter 14 ist ein kryogenes Fluid, wie beispielsweise flüssiger Stickstoff N2, aufgenommen. Der Kühlmittelbehälter 14 umfasst einen rohr- oder zylinderförmigen Basisabschnitt 15, der rotationssymmetrisch zu der Mittelachse M1 aufgebaut sein kann. Der Basisabschnitt 15 kann im Querschnitt eine kreisrunde oder annähernd kreisrunde Geometrie aufweisen. Der Basisabschnitt 15 ist stirnseitig jeweils durch einen Deckelabschnitt 16, 17 verschlossen. Die Deckelabschnitte 16, 17 können gewölbt sein. Insbesondere sind die Deckelabschnitte 16, 17 in die gleiche Richtung gewölbt. Der Kühlmittelbehälter 14 kann auch einen abweichenden Aufbau haben.

In dem Kühlmittelbehälter 14 kann eine Gaszone 18 mit verdampftem Stickstoff N2 und eine Flüssigkeitszone 19 mit flüssigem Stickstoff N2 vorgesehen sein. In einer Axialrichtung A des Innenbehälters 6 ist der Kühlmittelbehälter 14 neben dem Innenbehälter 6 angeordnet. Zwischen dem Innenbehälter 6, insbesondere dem Deckelabschnitt 11 des Innenbehälters, und dem Kühlmittelbehälter 14, insbesondere dem Deckelabschnitt 16 des Kühlmittelbehälters 14, ist ein Zwischenraum 20 vorgesehen, der Teil des Zwischenraums 12 sein kann. Das heißt, der Zwischenraum 20 ist ebenfalls evakuiert.

Der Transportbehälter 1 umfasst weiterhin einen dem Kühlsystem 13 zugeordneten thermischen Schild 21. Der thermische Schild 21 ist in dem zwischen dem Innenbehälter 6 und dem Außenbehälter 2 vorgesehenen evakuierten Zwischenraum 12 angeordnet. Der thermische Schild 21 ist mit Hilfe des flüssigen Stickstoffs N2 aktiv kühlbar oder aktiv gekühlt. Unter einer "aktiven Kühlung" ist vorliegend zu verstehen, dass der flüssige Stickstoff N2 zur Kühlung des thermischen Schilds 21 durch diesen hindurchgeleitet oder an diesem entlang geleitet wird. Der thermische Schild 21 wird hierbei auf eine Temperatur abgekühlt, die etwa dem Siedepunkt des Stickstoffs N2 entspricht.

Der thermische Schild 21 umfasst einen zylinder- oder rohrförmigen Basisabschnitt 22, der beidseitig von einem diesen stirnseitig abschließenden Deckelabschnitt 23, 24 abgeschlossen ist. Sowohl der Basisabschnitt 22 als auch die Deckelabschnitte 23, 24 sind mit Hilfe des Stickstoffs N2 aktiv gekühlt. Der Basisabschnitt 22 kann im Querschnitt eine kreisrunde oder annähernd kreisrunde Geometrie aufweisen. Der thermische Schild 21 ist vorzugsweise ebenfalls rotationssymmetrisch zu der Mittelachse M1 aufgebaut.

Ein erster Deckelabschnitt 23 des thermischen Schilds 21 ist zwischen dem Innenbehälter 6, insbesondere dem Deckelabschnitt 11 des Innenbehälters 6, und dem Kühlmittelbehälter 14, insbesondere dem Deckelabschnitt 16 des Kühlmittelbehälters 14, angeordnet. Ein zweiter Deckelabschnitt 24 des thermischen Schilds 21 ist dem Kühlmittelbehälter 14 abgewandt. Der thermische Schild 21 ist dabei selbsttragend. Das heißt, der thermische Schild 21 stützt sich weder auf dem Innenbehälter 6 noch auf dem Außenbehälter 2 ab. Hierzu kann an dem thermischen Schild 21 ein Tragring vorgesehen sein, der über Abstützungsstäbe, insbesondere Zugstäbe, an dem Außenbehälter 2 abgehängt ist. Weiterhin kann der Innenbehälter 6 über weitere Abstützungsstäbe an dem Tragring abgehängt sein. Der Wärmeeinfall durch die mechanischen Abstützungsstäbe wird teilweise durch den Tragring realisiert. Der Tragring besitzt Taschen, die eine größtmögliche thermische Länge der Abstützungsstäbe ermöglichen. Der Kühlmittelbehälter 14 besitzt Durchführungen für die mechanischen Abstützungsstäbe.

Der thermische Schild 21 ist fluiddurchlässig. Das heißt, ein Zwischenraum 25 zwischen dem Innenbehälter 6 und dem thermischen Schild 21 ist in Fluidverbindung mit dem Zwischenraum 12. Hierdurch können die Zwischenräume 12, 25 gleichzeitig evakuiert werden. In dem thermischen Schild 21 können Bohrungen, Durchbrüche oder dergleichen vorgesehen sein, um ein Evakuieren der Zwischenräume 12, 25 zu ermöglichen. Der thermische Schild 21 ist vorzugsweise aus einem hochreinen Aluminiumwerkstoff gefertigt.

Der erste Deckelabschnitt 23 des thermischen Schilds 21 schirmt den Kühlmittelbehälter 14 vollständig gegenüber dem Innenbehälter 6 ab. Das heißt, mit Blickrichtung von dem Innenbehälter 6 auf den Kühlmittelbehälter 14 ist der Kühlmittelbehälter 14 vollständig von dem ersten Deckelabschnitt 23 des thermischen Schilds 21 abgedeckt. Insbesondere umschließt der thermische Schild 21 den Innenbehälter 6 vollständig. Das heißt, der Innenbehälter 6 ist vollständig innerhalb des thermischen Schilds 21 angeordnet, wobei der thermische Schild 21, wie zuvor schon erwähnt, nicht fluiddicht ist.

Der thermische Schild 21 umfasst zum aktiven Kühlen desselben zumindest eine, bevorzugt jedoch mehrere Kühlleitungen. Beispielsweise kann der thermische Schild 21 sechs Kühlleitungen aufweisen. Die Kühlleitung oder die Kühlleitungen sind in Fluidverbindung mit dem Kühlmittelbehälter 14, so dass der flüssige Stickstoff N2 von dem Kühlmittelbehälter 14 in die Kühlleitung oder in die Kühlleitungen strömen kann. Das Kühlsystem 13 kann weiterhin einen in der Fig. 1 nicht gezeigten Phasenseparator umfassen, der dazu eingerichtet ist, gasförmigen Stickstoff N2 von flüssigem Stickstoff N2 zu trennen. Über den Phasenseparator kann der gasförmige Stickstoff N2 aus dem Kühlsystem 13 abgeblasen werden.

Die Kühlleitung oder die Kühlleitungen sind sowohl an dem Basisabschnitt 22 als auch an den Deckelabschnitten 23, 24 des thermischen Schilds 21 vorgesehen. Die Kühlleitung oder die Kühlleitungen weisen gegenüber einer Horizontalen H, die senkrecht zu einer Schwerkraftrichtung g angeordnet ist, eine Steigung auf. Insbesondere schließt die Kühlleitung oder schließen die Kühlleitungen mit der Horizontalen H einen Winkel von größer als 3° ein.

Der Innenbehälter 6 umfasst weiterhin ein in der Fig. 2 ausschnittsweise gezeigtes Isolationselement 26. Das Isolationselement 26 ist mehrlagig. Das heißt, das Isolationselement 26 umfasst eine Vielzahl an Lagen oder Schichten. Das Isolationselement 26 kann daher auch als mehrlagiges Isolationselement bezeichnet werden. Das Isolationselement 26 umschließt den Innenbehälter 6 vollständig. Das heißt, das Isolationselement 26 ist sowohl an dem Basisabschnitt 9 als auch an den Deckelabschnitten 10, 11 des Innenbehälters 6 vorgesehen. Das Isolationselement 26 ist zwischen dem Innenbehälter 6 und dem thermischen Schild 21 vorgesehen. Das heißt, das Isolationselement 26 ist in dem Zwischenraum 25 angeordnet. Das Isolationselement 26 weist außenseitig, das heißt, dem thermischen Schild 21 zugewandt, eine hochreflektierende Kupferschicht 27 auf. Die Kupferschicht 27 ist metallisch blank. Das heißt, die Kupferschicht 27 weist keine Oberflächenbeschichtung oder Oxidschicht auf.

Die eigentliche thermische Dämmung des Innenbehälters 6 zum Temperaturniveau des flüssigen Stickstoffs N2 des thermischen Schilds 21 erfolgt durch die Kupferschicht 27. Vorzugsweise ist die Kupferschicht 27 eine glatte Folie aus hochreinem blanken Kupfer, die stramm und ohne Falten um eine zwischen der Kupferschicht 27 und dem Innenbehälter 6 angeordnete mehrlagige Isolationsschicht 28 aufgezogen ist. Die Isolationsschicht 28 umfasst mehrere abwechselnd angeordnete Schichten oder Lagen aus perforierter und geprägter Aluminiumfolie 29 als Reflektor und Glaspapier 30 als Abstandshalter und als Dämmung beim Vakuumzusammenbruch zwischen den Aluminiumfolien 29. Die Isolationsschicht 28 kann 10-lagig sein. Die Lagen aus Aluminiumfolie 29 und Glaspapier 30 sind spaltfrei auf dem Innenbehälter 6 aufgebracht, das heißt, gepresst. Die Isolationsschicht 28 kann eine sogenannte MLI sein. Der Innenbehälter 6 und auch das Isolationselement 26 weisen außenseitig etwa eine dem Siedepunkt des Heliums He entsprechende Temperatur auf. Bei der Montage der Isolationsschicht 28 wird darauf geachtet, dass die Lagen aus Aluminiumfolie 29 und Glaspapier 30 eine möglichst große mechanische Pressung haben, um zu erreichen, dass alle Lagen der Isolationsschicht 28 möglichst isotherm sind.

Zwischen dem Isolationselement 26 und dem thermischen Schild 21 ist ein den Innenbehälter 6 vollständig umlaufender Spalt 31 vorgesehen. Der Spalt 31 ist auch zwischen dem Isolationselement 26 und den Deckelabschnitten 23, 24 des thermischen Schilds 21 vorgesehen. Der Spalt 31 weist eine Spaltbreite b31 auf. Die Spaltbreite b31 beträgt vorzugsweise 5 mm bis 15 mm, bevorzugt jedoch 10 mm. Der Spalt 31 ist evakuiert. Insbesondere ist der Spalt 31 Teil des Zwischenraums 25. Der Zwischenraum 25 ist dabei bis auf den Spalt 31 von dem Isolationselement 26 ausgefüllt.

Zwischen dem thermischen Schild 21 und dem Außenbehälter 2 kann eine weitere mehrlagige Isolationsschicht 32, insbesondere ebenfalls eine MLI, angeordnet sein, die den Zwischenraum 12 völlig ausfüllt und somit den thermischen Schild 21 außenseitig und den Außenbehälter 2 innenseitig kontaktiert. Die Isolationsschicht 32 ist sowohl zwischen den jeweiligen Basisabschnitten 3, 22 als auch zwischen dem Deckelabschnitt 24 des thermischen Schilds 21 und dem Deckelabschnitt 4 des Außenbehälters 2 sowie zwischen dem Deckelabschnitt 23 des thermischen Schilds 21 und dem Kühlmittelbehälter 14 vorgesehen. Die Isolationsschicht 32 umfasst ebenfalls abwechselnd angeordnete Schichten oder Lagen aus Aluminiumfolie 33 und Glasseide, oder Glasgittergewebe Glaspapier 34, die allerdings hierbei abweichend von dem zuvor beschriebenen Isolationselement 26 des Innenbehälters 6 flauschig in den Zwischenraum 12 eingebracht sind. "Flauschig" heißt hierbei, dass die Lagen aus Aluminiumfolie 33 und Glaspapier 34 nicht gepresst sind, so dass durch die Prägung und Perforierung der Aluminiumfolie 33 die Isolationsschicht 32 und damit der Zwischenraum 12 störungsfrei evakuiert werden kann.

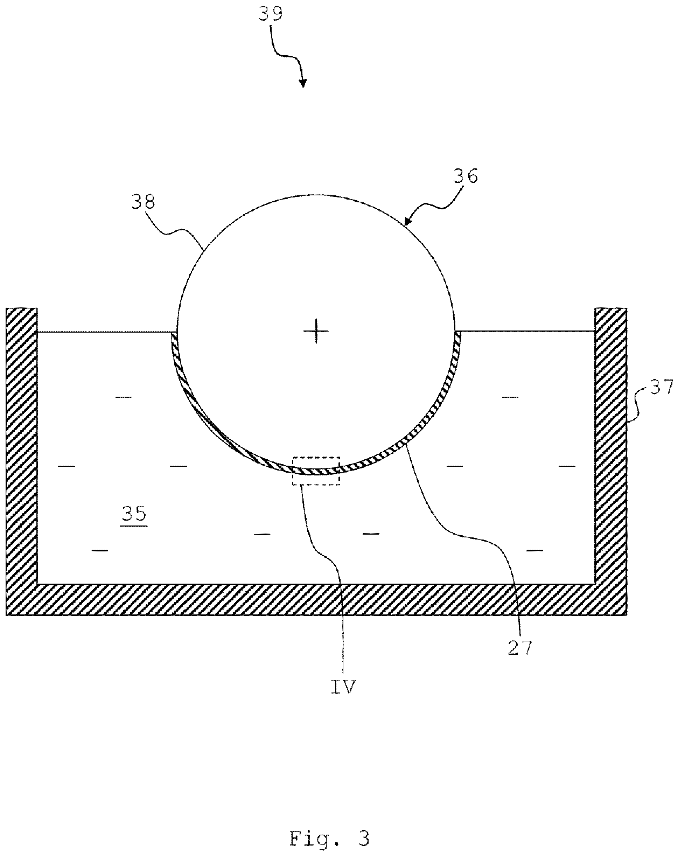

Wie die Fig. 3 zeigt, ist die Kupferschicht 27 eine aus einer Kupferlösung 35 elektrolytisch abgeschiedene Schicht. Die Kupferschicht 27 kann auch als ED-Kupferschicht (Engl.: electro deposited copper) bezeichnet werden. Die Kupferschicht 27 ist hochrein. Bevorzugt weist die Kupferschicht 27 einen Massenanteil von mindestens 99% Kupfer und bevorzugt von mindestens 99,9% Kupfer auf. Die Kupferlösung 35 kann eine schwefelsaure hochreine Kupferlösung sein.

Zum Herstellen der Kupferschicht 27 wird eine Walze oder Trommel 36 bis zu ihrer Hälfte in ein mit der Kupferlösung 35 gefülltes Bad 37 getaucht. Die Trommel 36 kann auch als Träger bezeichnet werden. Aus der Kupferlösung 35 wird Kupfer auf einer zylinderförmigen Außenfläche oder Trägerfläche 38 der Trommel 36 elektrolytisch abgeschieden. Die Abscheidung des Kupfers erfolgt dabei selbstverständlich nur auf dem Bereich der Trägerfläche 38, die in die Kupferlösung 35 eingetaucht ist. Die Kupferschicht 27 wird direkt auf der Trommel 36 abgeschieden. Eine zusätzliche Trägerfolie ist verzichtbar. Das Bad 37 und die Trommel 36 sind Teil einer Herstellungsvorrichtung 39 zum Herstellen der Kupferschicht 27. Die Herstellungsvorrichtung 39 kann beispielsweise noch eine Hebe- und Absenkvorrichtung umfassen, mit deren Hilfe die Trommel 36 aus dem Bad 37 herausgehoben und wieder in dieses abgesenkt werden kann.

Aufgrund der geringen Haftung der abgeschiedenen Kupferschicht 27 auf der oxidierten Trägerfläche 38 kann diese leicht von der Trommel 36 abgezogen oder abgehoben werden. Somit kann die Kupferschicht 27 kontinuierlich erzeugt werden.

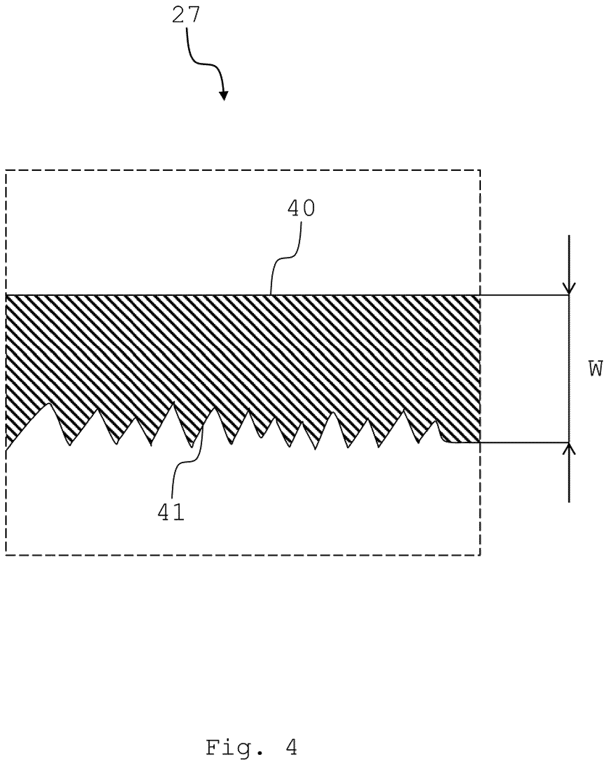

Wie die Fig. 4 zeigt, gibt es aufgrund des elektrolytischen Abscheidungsprozesses eine glatte oder badabgewandte Seite oder Oberfläche 40 und eine raue oder badzugewandte Seite oder Oberfläche 41. Die badabgewandte Oberfläche 40 kann auch als trommelzugewandte Seite bezeichnet werden. Die badzugewandte Oberfläche 41 kann auch als trommelabgewandte Seite oder Oberfläche bezeichnet werden. Eine Wandstärke W der Kupferschicht beträgt 10 bis 20 µm.

Die Kupferschicht 27 wird bei der Herstellung des Transportbehälters 1 so angeordnet, dass die glatte badabgewandte Oberfläche 40 dem thermischen Schild 21 zugewandt ist. Das heißt, der Spalt 31 ist von der badabgewandten Oberfläche 40 und dem thermischen Schild 21 definiert. Die raue badzugewandte Oberfläche 41 hingegen ist den Lagen an Aluminiumfolie 29 und Glaspapier 30 der Isolationsschicht 28 zugewandt. Somit ist nur die glatte badabgewandte Oberfläche 40 am relevanten Strahlungsaustausch beteiligt.

Mit Hilfe des Spalts 31 ist der thermische Schild 21 umlaufend beabstandet von der Kupferschicht 27 des Isolationselements 26 des Innenbehälters 6 angeordnet und berührt diese nicht. Der Wärmeeinfall durch Strahlung wird dadurch auf das physikalisch mögliche Minimum reduziert. Wärme von den Oberflächen des Innenbehälters 6, insbesondere von der badabgewandten Oberfläche 40 der Kupferschicht 27, zu dem thermischen Schild 21 wird nur durch Strahlung und Restgasleitung übertragen.

Die Funktionsweise des Transportbehälters 1 wird im Folgenden erläutert. Vor dem Befüllen des Innenbehälters 6 mit dem flüssigen Helium He wird zunächst der thermische Schild 21 mit Hilfe von tiefkaltem anfangs gasförmigen und später flüssigen Stickstoffs N2 zumindest annähernd oder ganz bis auf den Siedepunkt (1,3 bara, 79,5 K) des flüssigen Stickstoffs N2 abgekühlt. Der Innenbehälter 6 wird dabei noch nicht aktiv gekühlt. Bei dem Abkühlen des thermischen Schilds 21 wird das sich noch in dem Zwischenraum 12 befindliche Vakuum-Restgas an dem thermischen Schild 21 ausgefroren. Hierdurch kann bei einem Befüllen des Innenbehälters 6 mit dem flüssigen Helium He verhindert werden, dass das Vakuum-Restgas außenseitig auf dem Innenbehälter 6 ausgefroren wird und somit die metallisch blanke Oberfläche der Kupferschicht 27 des Isolationselements 26 des Innenbehälters 6 verunreinigt. Sobald der thermische Schild 21 und der Kühlmittelbehälter 14 vollständig abgekühlt sind und der Kühlmittelbehälter 14 wieder aufgefüllt ist, wird der Innenbehälter 6 mit dem flüssigen Helium He befüllt.

Der Transportbehälter 1 kann zum Transportieren des flüssigen Heliums He nun auf ein Transportfahrzeug, wie beispielsweise einen Lastkraftwagen oder ein Schiff, verbracht werden. Hierbei wird der thermische Schild 21 kontinuierlich mit Hilfe des flüssigen Stickstoffs N2 gekühlt. Der flüssige Stickstoff N2 wird dabei verbraucht und siedet in den Kühlleitungen des Kühlsystems 13. Dabei entstehende Gasblasen werden durch den in dem Kühlsystem 13 bezüglich der Schwerkraftrichtung g am höchsten angeordneten Phasenseparator zugeführt. Mit Hilfe des Phasenseparators kann der sich in dem Kühlsystem 13 befindliche gasförmige Stickstoff N2 abgeblasen werden, wodurch der flüssige Stickstoff N2 aus dem Kühlmittelbehälter 14 nachströmen kann.

Da wegen des Spalts 31 die Kupferschicht 27 keinen mechanischen Kontakt zu dem thermischen Schild 21 hat, kann Wärme nur durch Strahlung und Restgasleitung von den Oberflächen des Innenbehälters 6 auf den thermischen Schild 21 übertragen werden. Da die Kupferschicht 27 stramm auf die Isolationsschicht 28 aufgezogen ist, hat diese einen guten mechanischen Kontakt mit der Isolationsschicht 28 und die Kupferschicht 27 hat ebenfalls eine Temperatur, die nahe der Temperatur des Heliums He liegt. Da der Emissionsgrad oder die Emissivität der Kupferschicht 27 mit abnehmender Temperatur abnimmt, nimmt auch der Wärmeübergang durch Strahlung ab, so dass der Gesamtwärmeeinfall auf den Innenbehälter 6 über die Haltezeit des Heliums He auf unter 3,5 W gedrückt werden kann. Der Emissionsgrad eines Körpers gibt an, wie viel Strahlung er im Vergleich zu einem idealen Wärmestrahler, einem schwarzen Körper, abgibt.

Dadurch, dass der Innenbehälter 6 von dem thermischen Schild 21 vollständig umgeben ist, ist gewährleistet, dass der Innenbehälter 6 nur von Flächen umgeben ist, die eine dem Siedepunkt (1,3 bara, 78,5 K) von Stickstoff N2 entsprechende Temperatur aufweisen. Hierdurch besteht zwischen dem thermischen Schild 21 (78,5 K) und dem Innenbehälter (4,2 - 6 K) nur eine geringe Temperaturdifferenz. Hierdurch kann die Haltezeit für das flüssige Helium He im Vergleich zu bekannten Transportbehältern deutlich verlängert werden. Das Isolationselement 26 hat die Funktion einer Notisolierung für den Innenbehälter 6 für den Fall eines Vakuumzusammenbruchs.

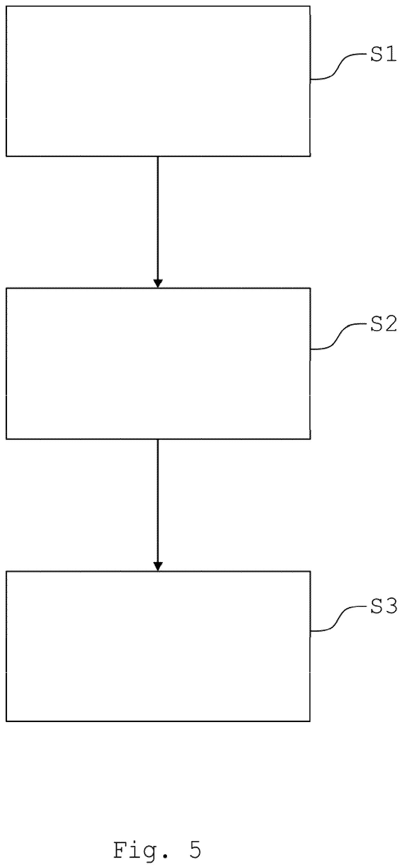

Die Fig. 5 zeigt ein schematisches Blockdiagramm eines Verfahrens zum Herstellen eines wie zuvor erläuterten Transportbehälters 1. Das Verfahren umfasst die folgenden Schritte: In einem Schritt S1 wird der Innenbehälter 6 bereitgestellt. Der Schritt S1 kann ein Herstellen des Innenbehälters 6 umfassen. In einem Schritt S2 wird die elektrolytisch abgeschiedene Kupferschicht 27, wie zuvor erläutert, hergestellt. In einem Schritt S3 wird das Isolationselement 26 außenseitig an dem Innenbehälter 6 angebracht, wobei das Isolationselement 26 als bezüglich dem Innenbehälter 6 äußerste Lage die Kupferschicht 27 aufweist. "Außenseitig" heißt hierbei dem thermischen Schild 21 zugewandt.

Das Verfahren kann noch die folgenden Schritte umfassen: Bereitstellen und/oder Herstellen des Kühlmittelbehälters 14. Bereitstellen und/oder Herstellen des Außenbehälters 2, in dem der Innenbehälter 6 und der Kühlmittelbehälter 14 aufgenommen werden. Bereitstellen und/oder Herstellen des thermischen Schilds 21, in dem der Innenbehälter 6 aufgenommen wird. Dabei wird zwischen dem Isolationselement 26 und dem thermischen Schild 21 der umlaufende Spalt 31 vorgesehen. Das Isolationselement 26 wird in dem Schritt S3 dabei so an dem Innenbehälter 6 angebracht, dass die Kupferschicht 27 dem thermischen Schild 21 zugewandt wird. Ferner wird in dem Schritt S3 die Kupferschicht 27 so angeordnet, dass die badabgewandte Oberfläche 40 dem Innenbehälter 6 abgewandt angeordnet wird und die badzugewandte Oberfläche 41 dem Innenbehälter 6 zugewandt angeordnet wird.

Obwohl die vorliegende Erfindung anhand von Ausführungsbeispielen beschrieben wurde, ist sie vielfältig modifizierbar.

### Verwendete Bezugszeichen

- 1: Transportbehälter
- 2: Außenbehälter
- 3: Basisabschnitt
- 4: Deckelabschnitt
- 5: Deckelabschnitt
- 6: Innenbehälter
- 7: Gaszone
- 8: Flüssigkeitszone
- 9: Basisabschnitt
- 10: Deckelabschnitt
- 11: Deckelabschnitt
- 12: Zwischenraum
- 13: Kühlsystem
- 14: Kühlmittelbehälter
- 15: Basisabschnitt
- 16: Deckelabschnitt
- 17: Deckelabschnitt
- 18: Gaszone
- 19: Flüssigkeitszone
- 20: Zwischenraum
- 21: Schild
- 22: Basisabschnitt
- 23: Deckelabschnitt
- 24: Deckelabschnitt
- 25: Zwischenraum
- 26: Isolationselement
- 27: Kupferschicht
- 28: Isolationsschicht
- 29: Aluminiumfolie
- 30: Glaspapier
- 31: Spalt
- 32: Isolationsschicht
- 33: Aluminiumfolie
- 34: Glaspapier
- 35: Kupferlösung
- 36: Trommel
- 37: Bad
- 38: Trägerfläche
- 39: Herstellungsvorrichtung
- 40: Oberfläche
- 41: Oberfläche

- A: Axialrichtung
- b31: Spaltbreite
- g: Schwerkraftrichtung
- H: Horizontale
- He: Helium
- H₂: Wasserstoff
- L2: Länge
- M1: Mittelachse
- N2: Stickstoff
- O2: Sauerstoff
- S1: Schritt
- S2: Schritt
- S3: Schritt
- W: Wandstärke

## Patentansprüche

1. Transportbehälter (1) für Helium (He), mit einem Innenbehälter (6) zum Aufnehmen des Heliums (He), einem Isolationselement (26), das außenseitig an dem Innenbehälter (6) vorgesehen ist, einem Kühlmittelbehälter (14) zum Aufnehmen eines kryogenen Fluids (N2), einem Außenbehälter (2), in dem der Innenbehälter (6) und der Kühlmittelbehälter (14) aufgenommen sind, und einem thermischen Schild (21), der mit Hilfe des kryogenen Fluids (N2) aktiv kühlbar ist und in dem der Innenbehälter (6) aufgenommen ist, wobei zwischen dem Isolationselement (26) und dem thermischen Schild (21) ein umlaufender Spalt (31) vorgesehen ist, **dadurch gekennzeichnet, dass** das Isolationselement (26) eine dem thermischen Schild (21) zugewandte elektrolytisch abgeschiedene Kupferschicht (27) aufweist.

2. Transportbehälter nach Anspruch 1, wobei die Kupferschicht (27) eine Wandstärke (W) von 10 µm bis 20 µm aufweist.

3. Transportbehälter nach Anspruch 1 oder 2, wobei das Isolationselement (26) außenseitig an dem Innenbehälter (6) befestigt ist.

4. Transportbehälter nach einem der Ansprüche 1 - 3, wobei das Isolationselement (26) eine zwischen dem Innenbehälter (6) und der Kupferschicht (27) angeordnete mehrlagige Isolationsschicht (28) aufweist.

5. Transportbehälter nach Anspruch 4, wobei die mehrlagige Isolationsschicht (28) mehrere abwechselnd angeordnete Lagen aus Aluminiumfolie (29) und Glaspapier (30) aufweist.

6. Transportbehälter nach Anspruch 5, wobei die Lagen aus Aluminiumfolie (29) und Glaspapier (30) spaltfrei auf dem Innenbehälter (6) aufgebracht sind.

7. Transportbehälter nach einem der Ansprüche 1 - 6, wobei die Kupferschicht (27) herstellungsbedingt eine badabgewandte Oberfläche (40), die dem thermischen Schild (21) zugewandt ist, und eine badzugewandte Oberfläche (41), die dem thermischen Schild (21) abgewandt ist, aufweist.

8. Transportbehälter nach einem der Ansprüche 1 - 7, ferner umfassend eine zwischen dem thermischen Schild (21) und dem Außenbehälter (2) angeordnete mehrlagige Isolationsschicht (32).

9. Transportbehälter nach Anspruch 8, wobei die mehrlagige Isolationsschicht (32) mehrere abwechselnd angeordnete Lagen aus Aluminiumfolie (33) und Glasseide, Glasgittergewebe oder Glaspapier (34) aufweist.

10. Transportbehälter nach Anspruch 9, wobei die Lagen aus Aluminiumfolie (33) und Glasseide, Glasgittergewebe oder Glaspapier (34) spaltbehaftet auf dem thermischen Schild (21) aufgebracht sind.

11. Transportbehälter nach einem der Ansprüche 1 - 10, wobei eine Mittelachse (M1) des Transportbehälters (1) parallel zu einer Horizontalen (H) orientiert ist.

12. Verfahren zum Herstellen eines Transportbehälters (1) für Helium, mit den Schritten:
a) Bereitstellen (S1) eines Innenbehälters (6) zum Aufnehmen des Heliums (He),
b) Herstellen (S2) einer elektrolytisch abgeschiedenen Kupferschicht (27), und
c) außenseitiges Anbringen (S3) eines Isolationselements (26) an dem Innenbehälter (6), wobei das Isolationselement (26) als bezüglich dem Innenbehälter (6) äußerste Lage die Kupferschicht (27) aufweist.

13. Verfahren nach Anspruch 12, wobei in dem Schritt b) die Kupferschicht (27) aus einer Kupferlösung (35) auf einer Trägerfläche (38) elektrolytisch abgeschieden wird.

14. Verfahren nach Anspruch 13, wobei die Trägerfläche (38) zylinderförmig, insbesondere kreiszylinderförmig, ist.

15. Verfahren nach einem der Ansprüche 12 - 14, wobei in dem Schritt c) die Kupferschicht (27) so angeordnet wird, dass eine badabgewandte Oberfläche (40) der Kupferschicht (27) dem Innenbehälter (6) abgewandt angeordnet wird und eine badzugewandte Oberfläche (41) der Kupferschicht (27) dem Innenbehälter (6) zugewandt angeordnet wird.

## Claims

1. A transport container (1) for helium (He), having an inner container (6) for receiving the helium (He), an insulation element (26) provided on the outside of the inner container (6), a coolant container (14) for receiving a cryogenic liquid (N2), an outer container (2) in which the inner container (6) and the coolant container (14) are accommodated, and a thermal shield (21) that can be actively cooled with the assistance of the cryogenic liquid (N2) and in which the inner container (6) is accommodated, wherein a circumferential gap (31) is provided between the insulation element (26) and the thermal shield (21), **characterized in that** the insulation element (26) has an electrolytically deposited copper layer (27) facing the thermal shield (21).

2. The transport container according to Claim 1, wherein the copper layer (27) has a wall thickness (W) of 10 µm to 20 µm.

3. The transport container according to Claims 1 or 2, wherein the insulation element (26) is attached to the outside of the inner container (6).

4. The transport container according to any one of Claims 1 - 3, wherein the insulation element (26) has a multi-layer insulation layer (28) arranged between the inner container (6) and the copper layer (27).

5. The transport container according to Claim 4, wherein the multi-layer insulation layer (28) has a plurality of alternately arranged layers of aluminum foil (29) and glass paper (30).

6. The transport container according to Claim 5, wherein the layers of aluminum foil (29) and glass paper (30) are applied to the inner container (6) without any gaps.

7. The transport container according to any one of Claims 1 - 6, wherein the copper layer (27) for production-related reasons has a surface (40) facing away from the bath and that faces the thermal shield (21), and a surface (41) facing the bath and that faces away from the thermal shield (21).

8. The transport container according to any one of Claims 1 - 7, further comprising a multi-layer insulation layer (32) arranged between the thermal shield (21) and the outer container (2).

9. The transport container according to Claim 8, wherein the multi-layer insulation layer (32) has a plurality of alternately arranged layers of aluminum foil (33) and glass silk, glass fiber mesh or glass paper (34).

10. The transport container according to Claim 9, wherein the layers made of aluminum foil (33) and glass silk, glass fiber mesh or glass paper (34) are applied to the thermal shield (21) with gaps.

11. The transport container according to any one of Claims 1 - 10, wherein a central axis (M1) of the transport container (1) is oriented parallel to a horizontal (H).

12. A method for producing a transport container (1) for helium, comprising the steps of:
a) providing (S1) an inner container (6) for receiving the helium (He),
b) producing (S2) an electrolytically deposited copper layer (27), and
c) attaching (S3) an insulation element (26) to the outside of the inner container (6), wherein the insulation element (26) has the copper layer (27) as the outermost layer with respect to the inner container (6).

13. The method according to Claim 12, wherein in step b) the copper layer (27) is electrolytically deposited on a carrier surface (38) from a copper solution (35).

14. The method according to Claim 13, wherein the support surface (38) is cylindrical, in particular circular-cylindrical.

15. The method according to any one of Claims 12 - 14, wherein in step c) the copper layer (27) is arranged such that a surface (40), facing away from the bath, of the copper layer (27) is arranged facing away from the inner container (6) and a surface (41) of the copper layer (27) facing the bath is arranged facing the inner container (6).

## Revendications

1. Conteneur de transport (1) pour de l'hélium (He), comportant un conteneur intérieur (6) permettant de recevoir l'hélium (He), un élément d'isolation (26) prévu côté extérieur sur le conteneur intérieur (6), un conteneur de réfrigérant (14) permettant de recevoir un fluide cryogénique (N2), un conteneur extérieur (2) dans lequel sont reçus le conteneur intérieur (6) et le conteneur de réfrigérant (14), et un bouclier thermique (21) pouvant être refroidi activement au moyen du fluide cryogénique (N2) et dans lequel est reçu le conteneur intérieur (6), une fente périphérique (31) étant prévue entre l'élément d'isolation (26) et le bouclier thermique (21), **caractérisé en ce que** l'élément d'isolation (26) présente une couche de cuivre (27) déposée de manière électrolytique et tournée vers le bouclier thermique (21).

2. Conteneur de transport selon la revendication 1, dans lequel la couche de cuivre (27) présente une épaisseur de paroi (W) de 10 µm à 20 µm.

3. Conteneur de transport selon la revendication 1 ou 2, dans lequel l'élément d'isolation (26) est fixé côté extérieur sur le conteneur intérieur (6).

4. Conteneur de transport selon l'une des revendications 1 à 3, dans lequel l'élément d'isolation (26) présente une couche d'isolation multicouche (28) disposée entre le conteneur intérieur (6) et la couche de cuivre (27).

5. Conteneur de transport selon la revendication 4, dans lequel la couche d'isolation multicouche (28) présente plusieurs couches disposées de manière alternée et constituées de feuille d'aluminium (29) et de papier de verre (30).

6. Conteneur de transport selon la revendication 5, dans lequel les couches constituées de feuille d'aluminium (29) et de papier de verre (30) sont appliquées sans fentes sur le conteneur intérieur (6).

7. Conteneur de transport selon l'une des revendications 1 à 6, dans lequel la couche de cuivre (27) présente, du fait de la fabrication, une surface opposée au bain (40) tournée vers le bouclier thermique (21) et une surface tournée vers le bain (41) opposée au bouclier thermique (21).

8. Conteneur de transport selon l'une des revendications 1 à 7, comprenant en outre une couche d'isolation multicouche (32) disposée entre le bouclier thermique (21) et le conteneur extérieur (2).

9. Conteneur de transport selon la revendication 8, dans lequel la couche d'isolation multicouche (32) présente plusieurs couches disposées de manière alternative et constituées de feuille d'aluminium (33) et de soie de verre, de treillis de verre ou de papier de verre (34).

10. Conteneur de transport selon la revendication 9, dans lequel les couches constituées de feuille d'aluminium (33) et de soie de verre, de treillis de verre ou de papier de verre (34) sont appliquées sur le bouclier thermique (21) avec des fentes.

11. Conteneur de transport selon l'une des revendications 1 à 10, dans lequel un axe central (M1) du conteneur de transport (1) est orienté parallèlement à une horizontale (H).

12. Procédé de fabrication d'un conteneur de transport (1) pour de l'hélium, comportant les étapes de :
a) fourniture (S1) d'un conteneur intérieur (6) permettant de recevoir l'hélium (He),
b) fabrication (S2) d'une couche de cuivre (27) déposée de manière électrolytique, et
c) fixation côté extérieur (S3) d'un élément d'isolation (26) sur le conteneur intérieur (6), l'élément d'isolation (26) présentant la couche de cuivre (27) en tant que couche la plus extérieure par rapport au conteneur intérieur (6).

13. Procédé selon la revendication 12, dans lequel, à l'étape b), la couche de cuivre (27) est déposée de manière électrolytique sur une surface de support (38) à partir d'une solution de cuivre (35).

14. Procédé selon la revendication 13, dans lequel la surface de support (38) est en forme de cylindre, en particulier en forme de cylindre circulaire.

15. Procédé selon l'une des revendications 12 à 14, dans lequel, à l'étape c), la couche de cuivre (27) est disposée de telle sorte qu'une surface opposée au bain (40) de la couche de cuivre (27) est disposée de manière à être opposée au conteneur intérieur (6) et une surface tournée vers le bain (41) de la couche de cuivre (27) est disposée de manière à être tournée vers le conteneur intérieur (6).
